# EUROPÄISCHE PATENTSCHRIFT

(11) **EP 2 681 984 B1**
(45) Veröffentlichungstag und Bekanntmachung des Hinweises auf die Patenterteilung: **06.01.2016**
(21) Anmeldenummer: 13165465.9
(22) Anmeldetag: 26.04.2013
(51) Int. Cl.: A01D 57/02, A01D 41/14

(54) **Mähdrescher**
Combine harvester
Moissonneuse-batteuse

(30) Priorität: 06.07.2012 DE 102012106065
(43) Veröffentlichungstag der Anmeldung: 08.01.2014
(73) Patentinhaber: CLAAS Selbstfahrende Erntemaschinen GmbH, 33428 Harsewinkel (DE)
(72) Erfinder: Behnke, Willi, 33803 Steinhagen (DE); Kriebel, Bastian, 48155 Münster (DE)

(56) Entgegenhaltungen:
- EP-A1- 0 812 530
- EP-A1- 2 517 549
- DE-A1- 10 339 551
- GB-A- 2 173 309

## Beschreibung

Die Erfindung betrifft gemäß dem Oberbegriff des Patentanspruchs 1 einen Mähdrescher mit einem eine Haspel und eine Schneidwerksmulde aufweisenden Schneidwerk, wobei die rotativ angetriebene Haspel mehrere mit Abstand zueinander auf einer Haspelwelle angeordnete Tragsterne sowie an diesen geführte mit Förderzinken versehene Tragbalken aufweist und wobei die Haspel über Tragarme an der Schneidwerksmulde geführt und gegenüber dieser und einem dieser vorgeordneten Schneidtisch zumindest höhenverstellbar ist, mit einem Sensor zur Ermittlung eines Istwertes der Höhenlage der Haspel, mit einem mit der Schneidwerksmulde verbundenen Schrägförderer, dem in Richtung eines Erntegutflusses eine Dresch- und Trenneinrichtung nachgeordnet ist, und mit einer Steuereinheit, die mit dem Sensor und zumindest einem Messwertaufnehmer zur Erfassung von Erntebedingungen des Mähdreschers und mit zur Höhenverstellung der Haspel dienenden Stellelementen verbunden ist.

Weiterhin betrifft die Erfindung gemäß dem Oberbegriff des Patentanspruchs 8 ein Verfahren zum Betrieb eines eine rotativ angetriebene Haspel aufweisenden Mähdreschers, wobei eine Höheneinstellung der Haspel gegenüber einer Schneidwerksmulde bzw. einem Schneidtisch über eine Steuereinheit und Stellelemente selbsttätig variiert wird und wobei über zumindest einen Messwertaufnehmer erfasste Erntebedingungen Parameter für eine Höhenverstellung der Haspel sind.

Für die Getreide-, Raps oder Sojaernte werden Mähdrescher mit einem Erntevorsatz versehen, der als höheneinstellbares Schneidwerk ausgebildet ist. Entsprechende Schneidwerke, die für die Ernte dieser unterschiedlichen Fruchtarten verwendet werden, weisen zumeist einen mittels entsprechender Stellelemente gegenüber der Schneidwerksmulde verschiebbaren Schneidtisch auf, wobei dieser Schneidtisch mit einem Mähbalken zum Schneiden des Ernteguts versehen ist. Folglich kann durch eine entsprechende Längsverschiebung des Schneidtisches gegenüber der in der Schneidwerksmulde angeordneten Einzugsschnecke das Schneidwerk im Hinblick auf eine Optimierung der Aufnahme des Erntegutes an unterschiedliche Halmlängen und insbesondere an die Ernte von Raps angepasst werden. Ziel ist es, Ernteverluste zu vermeiden, die darin bestehen, dass ein Anteil der Getreideähren sowie Rapsschoten oder Rapskörner nicht in die Schneidwerksmulde und von dort aus über den Schrägförderer in die Dresch- und Trenneinrichtung sondern auf das Feld gelangen, wo sie unter Umständen auswachsen.

Die Zuführung des gemähten Erntegutes zur Einzugsschnecke wird außerdem in erheblichem Maße durch die Wirkung der Haspel beeinflusst. Die im Wesentlichen aus Tragsternen und aus mit Förderzinken versehenen Tragbalken bestehende Haspeln rotiert um ihre Längsachse, wobei die lotrecht oder unter einem Winkel zur Lotrechen gerichteten Förderzinken in das Erntegut eingreifen. Die Haspel ist im Hinblick auf die unterschiedlichen Arten des Erntegutes und deren Zustand verstellbar, um den Erntegutfluss zu verbessern und den vorgenannten Verlusten entgegenzuwirken. Soweit es um eine bestimmte Lage der Haspel in Bezug auf den Mähbalken und die Einzugsschnecke geht, sind entsprechende, die Haspel aufnehmende Tragarme zumeist mit einer hydraulischen Längsverstellung versehen.

Außerdem kann die Haspeldrehzahl in Relation zur Fahrgeschwindigkeit des Mähdreschers beim Erntevorgang variiert werden, um durch eine auf den Zustand des Ernteguts und die Fahrgeschwindigkeit des Mähdreschers abgestimmte Haspelumfangsgeschwindigkeit innerhalb des Schneidwerks einen optimalen Erntegutfluss zu erzielen. Schließlich ist von wesentlicher Bedeutung für geringe Ernteverluste und für die Verbesserung des Gutflusses eine Höheneinstellung der Haspel, die Gegenstand der vorliegenden Erfindung ist.

Da die Haspelzinken das Halmgut bei Lagergetreide und die Fruchtstände bei Raps anheben sollen, damit diese mittels des Mähbalkens bodennah abgeschnitten werden können, ist eine an diesen Zustand des Halmguts abzustimmende Höheneinstellung der Haspel vorzunehmen. Außerdem wird, wie bereits dargelegt, der Erntegutfluss dadurch beeinflusst, wie stark die Förderzinken in das Erntegut eingreifen, was ebenfalls von der Höheneinstellung abhängig ist. Für die entsprechende Höheneinstellung der Haspel, die, wie erläutert, beispielsweise entsprechend der Höhe und der Dichte des Halmguts variiert werden kann, spielt außerdem auch die am heb- und senkbaren Schneidwerk eingestellte Schnitthöhe eine Rolle, denn, wenn diese verändert wird, ändert sich zwangsläufig auch die Lage der Haspel gegenüber dem Halmgut. Diese Höheneinstellungen der Haspel werden in der Regel von dem Fahrer des Mähdreschers manuell durchgeführt. Mit zunehmender Arbeitsbreite der Schneidwerke von Mähdreschern wird es für den Fahrer aber immer schwieriger, die Höhe, die Dichte und den Zustand des Halmguts sowie den daraus über die gesamte Breite des Schneidwerks resultierenden Erntegutfluss zu beobachten und aufgrund dessen Einstellungen an der Haspel vorzunehmen.

Ein Mähdrescher mit einem eine Haspel aufweisenden Schneidwerk der im Oberbegriff der unabhängigen Patentansprüche 1 und 8 angegebenen Gattung ist aus der DE 103 39 551 A1 bekannt. Der den Mähbalken aufnehmende Schneidtisch ist dabei gemeinsam mit der Schneidwerksmulde ausgebildet, also gegenüber dieser nicht verstellbar, und nimmt zwei schwenkbare Tragarme auf, die über an dem Schneidtisch angelenkte Hydraulikzylinder verstellt werden. Ein Verschwenken der Tragarme führt zu einer Änderung der Höhenlage der Haspel, wobei in zumindest einem der zwischen Tragarm und Schneidtisch vorgesehenen Gelenkpunkte ein Drehwinkelsensor als Istwert-Aufnehmer vorgesehen ist, der mit der Steuereinheit zusammenwirkt. Dabei soll die Haspelhöhe in Abhängigkeit von der von der Haspel auf das Erntegut wirkenden Kraft geregelt werden. Zu diesem Zweck wird ein über entsprechende Messwertaufnehmer ermitteltes Haspeldrehmoment der Steuereinheit zugeführt und in Abhängigkeit davon die Haspelhöhe variiert. Auf diese Weise soll erreicht werden, dass die Haspel mit ihren Förderzinken und Tragbalken mit einer voreingestellten gleichmäßigen Zugkraft auf das zu erntende Halmgut einwirkt.

Weiterhin ist aus der EP 2 143 316 A1 ein selbstfahrender Mähdrescher mit einer am Dach einer Kabine angeordneten Sensoreinheit zur Überwachung eines Erntegutflusses innerhalb eines Schneidwerkes bekannt. Dabei soll der Erntegutfluss ausschließlich in einem Bereich zwischen einem ersten Kontakt des Erntegutes mit dem Mähbalken bis hin zur Übergabe des Erntegutes an eine nachgeordnete Erntegutannahmeeinrichtung, womit eine Einzugsschnecke und ein nachfolgender Schrägförderer gemeint sind, überwacht werden. Die entsprechende am Dach der Kabine angebrachte Sensoreinheit ist als Kamera ausgebildet, die gemeinsam mit einer Auswerte- und Steuereinheit ein Bildauswerteverfahren durchführt. Dadurch sollen zum einen Unregelmäßigkeiten im Erntegutfluss und zum anderen Fremdkörper in Form von Steinen oder Metallteilen, die vom Schneidwerk aufgenommen wurden, erkannt werden, damit sich Beschädigungen des Dreschwerks vermeiden lassen.

Die GB 2 173 309 A beschreibt einen Mähdrescher gemäß dem Oberbegriff des Anspruches 1, Zur Höhensteuerung von Haspel und Messerbalken ist vorgesehen, dass ein als Sonar ausgeführter Messwertaufnehmer die Bestandshöhe vor dem Schneidwerk detektiert. Das Signal des Messwertaufnehmers wird zur Höhensteuerung herangezogen.

Es ist Aufgabe der vorliegenden Erfindung, eine selbsttägige Steuerung der Höheneinstellung der Haspel zu schaffen, mit welcher der Ernteprozess optimiert wird, Erntegutverluste vermieden werden und der Fahrer des Mähdreschers in erheblich reduziertem Umfang davon entlastet wird, die Art und den Zustand des Erntegutes zu überwachen und aufgrund dessen sowie aufgrund eigener Erfahrungen Einstellungen der Haspel vorzunehmen.

Diese Aufgabe wird, ausgehend vom Oberbegriff des Patentanspruchs 1, in Verbindung mit dessen kennzeichnenden Merkmalen gelöst. Die darauf folgenden abhängigen Patentansprüche geben jeweils vorteilhafte Weiterbildungen der Erfindung wieder.

Gemäß dem kennzeichnenden Teil des Patentanspruchs 1 soll der zumindest eine Messwertaufnehmer zur Erfassung von Schwankungen des Erntegutflusses in zumindest einem dem Schneidtisch nachgeordneten Förderorgan ausgebildet sein. Zum einen zielt die vorliegende Erfindung somit darauf ab, mittels einer automatischen Höheneinstellung der Haspel die Schwankungen des Gutflusses in den dem Schneidwerk nachfolgenden Vorrichtungen des Mähdreschers zu reduzieren und zu diesem Zweck den Gutfluss im Schneidwerk durch eine Veränderung des Haspeleingriffs mehr oder weniger zu unterstützen. Eine starke Unterstützung des Gutflusses durch einen verstärkten Eingriff der Haspel wird unter anderem bei starkem Lagergetreide erforderlich sein.

Bei Spritzkornverlusten handelt es sich um Raps- oder Getreidekörner sowie um Getreideähren, die beim Auftreffen der Förderzinken und Tragbalken der Haspel vom Halmgut getrennt werden und außerhalb der Erstreckung des Schneidwerkes auf den Boden des Feldes gelangen. Das Problem tritt in erster Linie bei der Fruchtart Raps auf, da die reifen Fruchtschoten bei einer Berührung mit dem Förderzinken oder den Tragbalken leicht aufspringen, woraufhin die Rapskörner als Ernteverluste auf den Boden des Feldes gelangen. Problematisch kann aber auch die Getreideernte sein, wenn sich aufgrund einer anhaltenden Schlechtwetterperiode die Ernte verzögert hat und das Getreide überreif ist. Dann können Verluste dadurch auftreten, dass die Haspel Getreidekörner oder Knickähren von den Halmen entfernt.

Die vorliegende Erfindung zielt darauf ab, diese Erntegutverluste zu vermeiden und darüber hinaus darauf ab, durch eine zu niedrige Haspeleinstellung ein Wickeln des Halmgutes oder eine Getreidemitnahme, durch die ebenfalls Erntegutverluste entstehen können, zu vermeiden. Der Fahrer des Mähdreschers ist folglich durch die automatische Höheneinstellung der Haspel von entsprechenden manuellen Einstellungen entlastet und muss nicht mehr den Gutfluss ständig über die gesamte Breite des Schneidwerkes kontrollieren. Außerdem muss er auch nicht mehr die Entscheidung treffen, ob eine von ihm erkannte Schwankung des Gutflusses groß genug ist um die Haspel mehr oder weniger stark zur Unterstützung des Gutflusses einzusetzen.

Demgegenüber wird nach der DE 103 39 551 A1 die Höheneinstellung der Haspel in Abhängigkeit von einem an der Haspel ermittelten Drehmoment vorgenommen. Da aber, wie bereits dargelegt, der Zustand des zu erntenden Halmgutes sehr unterschiedlich sein kann reicht eine Veränderung der Höheneinstellung der Haspel aufgrund des an der Haspel ermittelten Drehmoments nicht aus. Neben der jeweiligen Bestandshöhe und Bestandsdichte sind auch die Feuchtigkeit des Erntegutes, der Anteil an Unkräutern und das Auftreten von Lagergetreide von Bedeutung. Weiterhin kann mit dieser vorbekannten Art der Regelung der Höheneinstellung der Haspel nicht verhindert werden, dass insbesondere bei Raps und bei reifem Getreide Spritzkornverluste auftreten. Die weiterhin genannte EP 2 143 316 A1 ermittelt nur den Gutfluss des Erntegutes im Bereich des den Mähbalken aufnehmenden Schneidtisches, wobei dieser, wie bereits dargelegt, durch die Optik einer Kamera erfasst werden soll. Dabei kommt es offenbar primär auf die Ermittlung von Fremdkörpern und nicht auf einen optimalen Erntegutfluss in den dem Schneidtisch nachgeordneten Vorrichtungen an. Es erfolgt bei dieser vorbekannten Überwachungseinrichtung ebenfalls keine Ermittlung von Spritzkornverlusten.

In weiterer Ausgestaltung der Erfindung soll der Messwertaufnehmer zur Erfassung von Schwankungen des Erntegutflusses als im Schrägförderer angeordnete Erntemengenmesseinrichtung ausgebildet sein, wobei die Erntemengenmesseinrichtung eine Auslenkung einer Förderkette oder als Schichthöhen-Potentiometer eine Schichtdicke des Erntegutstromes ermittelt oder zur Erfassung von Schwankungen des Erntegutflusses an einem Antrieb einer im Schneidwerk angeordneten Einzugsschnecke angeordnet ist und zur Ermittlung des auf die Einzugsschnecke übertragenen Antriebsdrehmoments dient. Die im Schrägförderer angeordneten Förderketten sind über zueinander beabstandete Förderleisten miteinander verbunden, wobei das Erntegut über eine Eintrittsöffnung im rückwärtigen Teil der Schneidwerksmulde in den Schrägförderer gelangt, dort von den Förderleisten erfasst und entlang eines Bodens des Schrägförderers geführt wird. Eine Zunahme der Schichtdicke des Erntegutstroms führt zu einer entsprechenden Auslenkung der beiden die Förderleisten aufnehmenden Ketten, und erfindungsgemäß soll diese Auslenkung zur Bestimmung des momentanen Gutflusses herangezogen werden. Alternativ dazu besteht eine Möglichkeit darin, den Gutfluss unmittelbar über die Schichtdicke des Erntegutstromes zu bestimmen, wobei hierfür ein Schichthöhen-Potentiometer verwendet werden soll. Dieses SchichthöhenPotentiometer wird dabei ebenfalls innerhalb des Schrägförderers angeordnet.

Schließlich besteht eine weitere Alternative darin, die Gutschwankungen bereits über den Erntegutfluss an der Einzugsschnecke zu bestimmen, wobei hierzu das von der Einzugsschnecke geforderte Antriebsdrehmoment ermittelt wird. Die Einzugsschnecke dient als Querförderer und zieht das Erntegut über die gesamte Breite der Schneidwerksmulde mittig zusammen, um es dann in Richtung des Schrägförderers zu transportieren. Hierzu ist die Einzugsschnecke mit gegenläufigen Schneckenwendeln versehen. Mit einer Zunahme der von den Schneckenwendeln der Einzugsschnecke mittig zusammengezogenen Erntegutmenge steigt folglich das erforderliche Drehmoment an.

Weiterhin besteht die Möglichkeit, den Messwertaufnehmer zur Erfassung von Schwankungen des Erntegutflusses als Bestandteil eines an einem Antriebsmotor des Mähdreschers vorgesehenen Motormanagements auszubilden, wobei dieser Antriebsmotor das Schneidwerk, den Schrägförderer sowie die Dresch- und Trenneinrichtung antreibt und vom Motormanagement eine jeweilige Motorauslastung ermittelbar ist. Bei einer entsprechenden Überwachung von Schwankungen des Erntegutflusses über das Motormanagement ist allerdings zu berücksichtigen, dass der Antriebsmotor auch den Fahrantrieb des Mähdreschers über ein leistungsverzweigtes Getriebe oder über einen hydrostatischen Fahrantrieb antreibt. Folglich könnten fehlerhafte Messwerte ermittelt werden, wenn Belastungsschwankungen im Fahrantrieb auftreten. Das Gleiche kann auch der Fall sein, wenn die Antriebsräder des Mähdreschers aufgrund einer längeren Feuchtigkeitsperiode relativ stark in den Boden einsinken und dadurch der Fahrwiderstand zunimmt. Den durch diese Fahrzustände entstehenden fehlerhaften Messwerten kann dadurch entgegengewirkt werden, dass der jeweilige Fahrzustand am Getriebe des Mähdreschers ermittelt und ein daraus abgeleiteter Korrekturwert der Steuereinheit zugeführt wird.

Außerdem besteht die Möglichkeit, den Messwertaufnehmer zur Erfassung von Schwankungen des Erntegutflusses im Antrieb einer Dreschtrommel oder Vorbeschleunigungstrommel der Dresch- und Trenneinrichtung anzuordnen und zur Ermittlung einer lastabhängigen Schlupfänderung oder einer Änderung von deren Antriebsdrehmoment vorzusehen. Üblicherweise ist der Antrieb des Dreschwerks als Variatortrieb in Form eines Riementriebes ausgebildet. Eine Schlupfänderung kann dabei durch einen als Schlupfsensoren an der Antriebs- und der Abtriebsscheibe angeordneten Messwertaufnehmer erfasst werden. Außerdem lassen sich Änderungen des Antriebsdrehmoments beispielsweise durch Federwegänderungen an Kegeischeiben der Variatoren des Variatorgetriebes ermitteln. Wenn ein Antrieb der Drescheinrichtung über ein hydrostatisches Getriebe erfolgt, so könnte hierbei das geforderte Antriebsdrehmoment aus Druckschwankungen im Arbeitskreis des hydrostatischen Getriebes hergeleitet werden.

In weiterer Ausgestaltung der Erfindung ist vorgesehen, einen zweiten Messwertaufnehmer zur Erfassung von Spritzkornverlusten oberhalb einer vertikal verlaufenden Rückwand der Schneidwerksmulde und/oder an den Tragbalken der Haspel anzuordnen. Diese Spritzkornverluste sind insbesondere bei der Ernte von Raps zu überwachen, bei der sich insbesondere im oberen Bereich der Fruchtstände viele reife Schoten befinden. Diese springen erfahrungsgemäß bei einer Berührung durch die Förderzinken der Haspel oder deren Tragbalken auf, so dass die Rapskörner in einen außerhalb des Schneidwerks liegenden Bereich gelangen können und folglich erhebliche Erntegutverluste auftreten. Wenn witterungsbedingt Verzögerungen der Rapsernte aufgetreten sind, kann es auch sein, dass sich im oberen Bereich der Fruchtstände die Schoten bereits vor Beginn des Erntevorganges entleert haben und dass nur noch reife Schoten im unteren Bereich der Fruchtstände vorhanden sind. Auch für diese Bedingungen ist die Wirkungsweise der Haspel wesentlich, wobei durch eine entsprechende Änderung von deren Antriebsdrehzahl, deren Längsposition im Schneidwerk und dessen Höheneinstellung für günstige Voraussetzungen gesorgt wird. Neben der Ernte von Raps können ähnliche Probleme auch bei der Ernte von Soja auftreten.

Der entsprechende Messwertaufnehmer ist mit einer entsprechenden Sensorik versehen, die das Auftreten von Spritzkorn oder aber auch von durch die Haspelzinken oder die Tragarme abgeschlagenen Getreideähren erfasst. Es besteht neben der vorgeschlagenen Anordnung der Messwertaufnehmer oberhalb der Rückwand der Schneidwerksmulde auch die Möglichkeit, diese an den Tragbalken der Haspel anzuordnen, damit auch Spritzkorn, das aus dem Erntegut in Mährichtung austritt, erfasst wird. In diesem Fall kann eine kabellose Signalübertragung zwischen den Messwertaufnehmern und der Steuereinheit vorgesehen sein. Wenn das Problem auftretenden Spritzkornes detektiert ist, werden in entsprechender Weise die Höheneinstellung der Haspel, deren Stellung in Längsrichtung des Mähdreschers und ggf. auch die Haspeldrehzahl über die Steuereinheit verändert. Entsprechende Messwertaufnehmer zur Erfassung von Spritzkornverlusten können dabei alternativ zu der zuvor erläuterten Erfassung des Erntegutflusses vorgesehen sein oder gemeinsam mit dieser für eine Steuerung der Höhenlage der Haspel herangezogen werden.

Die Messwertaufnehmer zur Erfassung von Spritzkornverlusten sollen in Weiterbildung der Erfindung als Spektrometer mit einer Lichtquelle und einem optischen Detektor zum Empfang von Lichtimpulsen des von den Lichtkörpern reflektierten Lichts oder als Kamerasensor ausgebildet sein. Neben dieser optischen Auswertung besteht auch die Möglichkeit, die Spritzkornverluste mit einem Detektor zu erfassen, an dem durch auf diesen aufprallende Spritzkörner impulsförmige Signale erzeugt werden. Entsprechende Einrichtungen sind bereits im Zusammenhang mit der Ermittlung von Körnerverlusten am Ende der Trenneinrichtung des Mähdreschers bekannt, wo im Stroh und in der Spreu Körner detektiert werden. Das Auftreten von Spritzkorn kann auch ein Maß dafür sein, wie weit der Schneidtisch bei der Ernte von Raps nach vorne verschoben werden muss.

In weiterer Ausgestaltung der Erfindung wird gemäß Patentanspruch 8 zur Lösung der vorgenannten Aufgabe ein Verfahren vorgeschlagen, wobei die Aufgabe ausgehend vom Oberbegriff des Patentanspruchs 8 in Verbindung mit dessen kennzeichnenden Merkmalen gelöst ist.

Danach soll eine selbsttätige Höheneinstellung der Haspel im Rahmen eines definierten oder manuell definierbaren Steuerungsprozesses mittels der Stellelemente und der Steuereinrichtung in Abhängigkeit von einem ersten Parameter erfolgen, der aus über erste Messwertaufnehmer ermittelten Schwankungen des Erntegutflusses an einem innerhalb der Schneidwerksmulde angeordneten Querförderer, an einem Schrägförderer oder an einem Dreschwerk resultiert. Zu Beginn des Steuerungsprozesses kann dabei über einen Rechner aus bestimmten Randbedingungen ein Steuerungsprozess definiert werden oder dieser Steuerungsprozess wird vom Fahrer des Mähdreschers manuell definiert. Die Höheneinstellung der Haspel wird dabei fortlaufend aufgrund der während des Erntevorgangs auftretenden Schwankungen des Gutflusses korrigiert.

Weiterhin kann eine selbsttätige Höheneinstellung der Haspel mittels der Stellelemente und der Steuereinrichtung in Abhängigkeit von einem zweiten Parameter erfolgen, der als von einem zweiten Messwertaufnehmer detektierte Spritzkornverluste erfasst wird.

In diesem Zusammenhang besteht die Möglichkeit, dass der zweite Parameter als Korrekturwert angesehen wird, so dass zunächst aufgrund des ersten Parameters eine Höheneinstellung der Haspel erfolgt und diese aufgrund des zweiten Parameters, also beim Auftreten von Spritzkornverlusten in entsprechender Weise verändert wird.

Schließlich soll eine selbsttätige Höheneinstellung der Haspel über ein Bedienfeld, die Steuereinrichtung und die Stellelemente gemäß folgenden Schritten erfolgen:

### Manuelle Höheneinstellung:

Von dem Fahrer wird bei Beginn des Erntevorgangs am Bestand zunächst eine Grundeinstellung der Höhenlage der Haspel vorgenommen, mit der der nachfolgende Erntevorgang gestartet werden soll.

### Eingabe der Fruchtart und/oder des Zustandes des Erntegutes:

Es handelt um die Angabe von Reifegrad, Feuchtigkeit, Lagergetreide usw. Über das in der Fahrerkabine des Mähdreschers angeordnete Bedienfeld gibt der Fahrer die entsprechenden Kriterien ein, woraus eine Recheneinheit entsprechende Grundvoraussetzungen für die Höhenverstellung, die Längsverstellung und die Antriebsdrehzahl der Haspel ermittelt.

### Wechsel in die Betriebsart "automatischer Betrieb":

Der Fahrer wechselt sodann am Bedienfeld die Einstellung in die Betriebsart "automatischer Betrieb", so dass aufgrund der von den Messwertaufnehmern ermittelten Bedingungen eine Steuerung der Höheneinstellung mittels der Steuereinheit erfolgt.

### Analyse eines aufgrund des Erntegutflusses gebildeten Signals:

Erfindungsgemäß wird der Erntegutfluss im Bereich des Querförderers, des Schrägförderers des Antriebs der Dreschtrommel oder des Motormanagements ermittelt und im Rechner ein entsprechendes Signal gebildet. Dabei soll eine Schwankungsbreite dieses Signals geprüft werden, d. h. bei geringer Schwankungsbreite wird die Haspel in eine höhere Position angehoben, während bei großer Schwankungsbreite die Haspel in eine niedrigere Position abgesenkt wird. Hierbei wird eine Amplitudenhöhe dieses Signals ausgewertet. Ein Amplitudenanstieg lässt beispielsweise darauf schließen, dass es sich um schwer zu förderndes Erntegut handelt, so dass in diesem Fall die Haspelunterstützung erhöht werden muss.

Parallele Auswertung eines einen Spritzkornverlust charakterisierenden Signals, das zu einer eventuellen Korrektur der ersten ernteflussabhängigen Höheneinstellung führt:

Ein Ansprechen des entsprechenden Detektors, das auf Spritzkornverluste oder den Verlust von Getreideähren schließen lässt, führt zu einem Anheben der Haspel, bis diese Spritzkornverluste reduziert sind. Mittels dieses zweiten Parameters wird die aufgrund des ersten Parameters vorgenommene Einstellung der Haspel in entsprechender Weise korrigiert, um Erntegutverluste auszuschließen.

### Wechsel zur Überprüfung der erntegutflussabhängigen Höheneinstellung:

Sofern keine Erntegutverluste durch Spritzkorn auftreten, erfolgt wieder eine Regelung der Höheneinstellung entsprechend der Schwankungen des Gutflusses.

Die Erfindung ist nicht auf die angegebene Kombination der Merkmale der unabhängigen Patentansprüche 1 und 8 mit den darauf rückbezogenen Patentansprüchen beschränkt. Es ergeben sich darüber hinaus Möglichkeiten, einzelne Merkmale, auch soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Vorteilhafte Ausgestaltungen der Erfindung werden nachfolgend unter Bezugnahme auf die Zeichnungen erläutert. Es zeigen:
- Figur 1: als schematische Darstellung eine Seitenansicht eines selbstfahrenden Mähdreschers, dessen an einem Schneidwerk angeordnete Haspel in Abhängigkeit von unterschiedlichen Parametern mittels einer Steuereinrichtung selbsttätig höhenverstellbar sein soll,
- Figur 2: als schematische Darstellung eine Seitenansicht einer über eine Steuereinrichtung selbsttätig höheneinstellbare Haspel, bei der die Höheneinstellung in Abhängigkeit von erfassten Spritzkornverlusten erfolgt,
- Figur 3: als schematische Darstellung eine Seitenansicht einer über eine Steuereinrichtung selbsttätig höheneinstellbare Haspel, bei der die Höheneinstellung in Abhängigkeit von erfassten Schwankungen eines Erntegutflusses innerhalb eines Dreschwerkes erfolgt,
- Figur 4: ein Diagramm, das bei geringer Haspelunterstützung des Gutflusses eine geringe mittlere Motorauslastung eines den Mähdrescher antreibenden Antriebsmotors zeigt, woraus eine niedrige Erntegeschwindigkeit resultiert,
- Figur 5: ein Diagramm, das im Gegensatz zum Diagramm nach Figur 4 bei hoher Haspelunterstützung des Gutflusses eine hohe mittlere Motorauslastung zeigt, woraus eine gegenüber dem Beispiel nach Figur 4 höhere Erntegeschwindigkeit resultiert,
- Figur 6: als Diagramm eine Analyse eines Schwankungsbereichs von ermittelten Gutflusssignalen und
- Figur 7: eine Darstellung eines Displays, einer Eingabeeinheit sowie einer mit Messwertaufnehmern verbundenen Steuereinheit die zur erfindungsgemäßen Steuerung der Haspelstellungen vorgesehen ist.

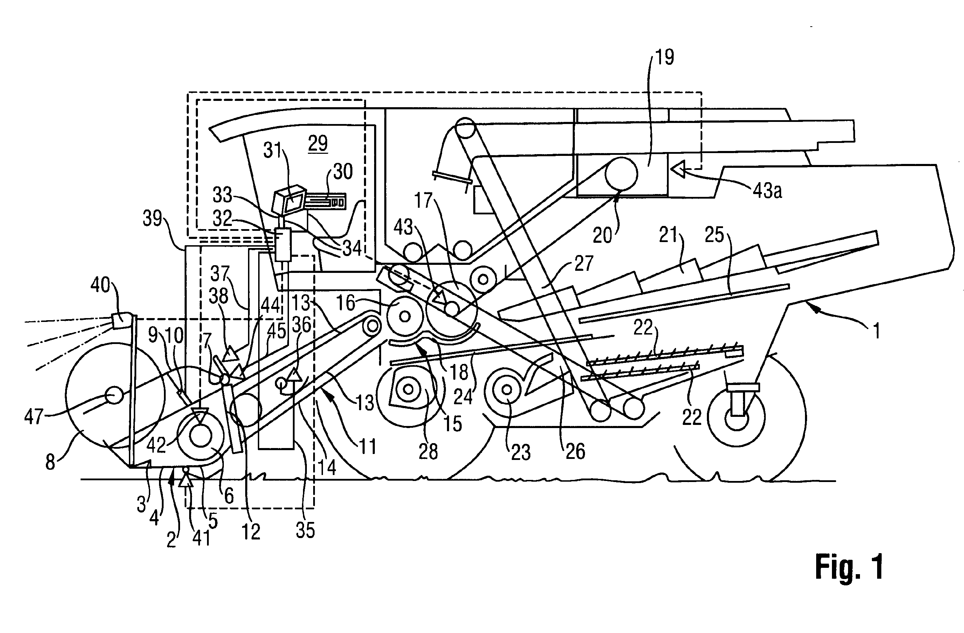

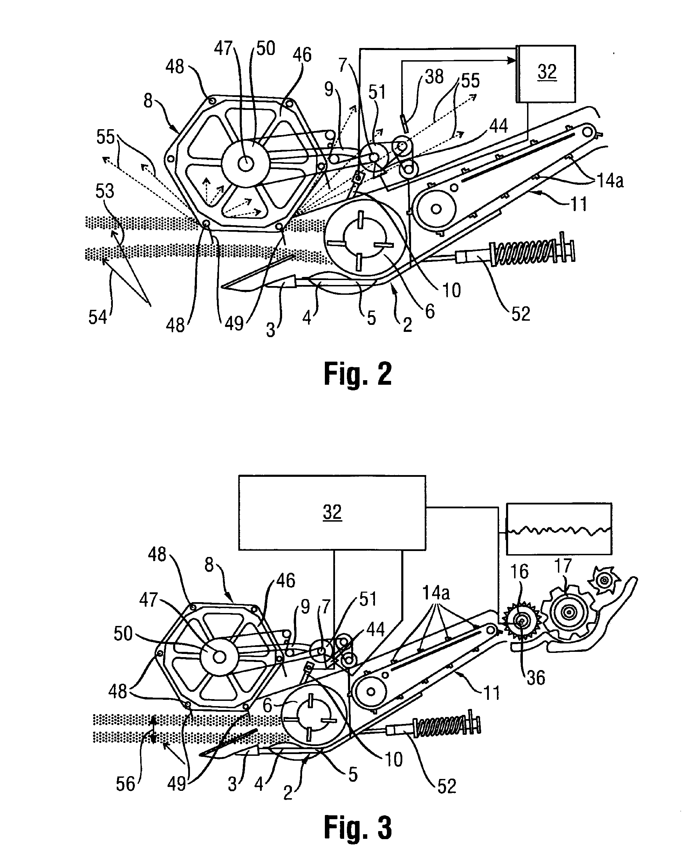

In der Figur 1 ist mit 1 ein selbstfahrender Mähdrescher bezeichnet, der ein Schneidwerk 2 zur Ernte von Getreide, Raps, Soja usw. aufweist. Das Schneidwerk 2 besteht dabei im Wesentlichen aus einem einen Mähbalken 3 aufnehmenden Schneidtisch 4, an den sich in Richtung des Erntegutflusses eine Schneidwerksmulde 5 anschließt. In der schematischen Darstellung sind der Schneidtisch 4 und die Schneidwerksmulde 5 als gemeinsame Baueinheit ausgebildet. Es besteht aber die Möglichkeit, den Schneidtisch 4 von der Schneidwerksmulde 5 getrennt und gegenüber dieser längsverschiebbar anzuordnen, wodurch sich der Abstand zwischen dem Mähbalken 3 und einer in der Schneidwerksmulde 5 angeordneten Einzugsschnecke 6 variieren lässt. Weiterhin ist im rückwärtigen Bereich der Schneidwerksmulde 5 an Gelenken 7 eine Haspel 8 über Tragarme 9 geführt, wobei die Höhenlage der Haspel 8 mittels als Hydraulikzylinder 10 ausgebildeten Stellelementen veränderbar ist. Die Haspel 8, deren Drehzahl vorzugsweise über ein nicht näher dargestelltes Variatorgetriebe stufenlos veränderbar ist und die, je nach Ausbildung der Tragarme 9, auch in Längsrichtung des Mähdreschers 1 verstellbar sein kann, wird im Zusammenhang mit den nachfolgenden Figuren 2 und 3 noch näher erläutert werden.

An das Schneidwerk 2 schließt sich ein Schrägförderer 11 an, wobei die Einzugsschnecke 6 über gegenläufige Schneckenwendel das Erntegut über die gesamte Breite der Schneidwerksmulde 5 mittig zusammenzieht und über eine Öffnung in einer Rückwand 12 der Schneidwerksmulde 5 an den Schrägförderer 11 übergibt. Dieser weist zumindest zwei zueinander beabstandete Ketten 13 auf, die mit einem Boden 14 eines Förderkanals zusammenwirkende Förderleisten 14a (siehe Figuren 2 und 3) aufnehmen. Das von den in den Figuren 2 und 3 dargestellten Förderleisten14a erfasste Erntegut wird über den Boden14 transportiert und gelangt in ein tangential beaufschlagtes Dreschwerk 15, das aus einer Vorbeschleunigungstrommel 16, einer Dreschtrommel 17 sowie einem Dreschkorb 18 besteht. Dabei wird das Dreschwerk 15 von einem Antriebsmotor 19 aus über ein Variatorgetriebe 20 angetrieben. Dieser Antriebsmotor 19 ist die einzige Antriebsquelle des Mähdreschers 1 und treibt daher unter anderem auch das gesamte Schneidwerk 2, den Schrägförderer 11, das Dreschwerk 15 sowie die diesem nachgeordneten Hordenschüttler 21, Siebe 22, ein Reinigungsgebläse 23, einen Vorbereitungsboden 24, einen Rücklaufboden 25, einen Überkehrelevator 26, einen Korntankelevator 27 und ein einer Antriebsachse zugeordnetes Getriebe 28 an. Außerdem weist der Mähdrescher 1 eine Fahrerkabine 29 auf, innerhalb welcher eine Eingabeeinheit 30 und ein Display 31 angeordnet sind.

Wie weiterhin aus der Figur 1 hervorgeht, stehen sowohl das Display 31 als auch die Eingabeeinheit 30 mit einer Steuereinheit 32 über Datenleitungen 33 und 34 in Verbindung. Bei dem dargestellten Ausführungsbeispiel der Erfindung ist die Steuereinheit 32 bevorzugt über eine erste Signalleitung 35 mit ersten Messwertaufnehmern 36 und über eine zweite Signalleitung 37 mit zweiten Messwertaufnehmern 38 verbunden. Alternativ dazu sind weitere Signalleitungen gestrichelt dargestellt, wobei auf die entsprechende Anordnung von mit diesen verbundenen Messwertaufnehmern noch gesondert eingegangen werden wird. An zumindest einem der zuvor erläuterten Gelenke 7 ist ein Sensor 44 zur Erfassung eines Istwertes der Höhenlage der Haspel 8 angeordnet, wobei die entsprechenden Messwerte über eine Sensorleitung 45 an die Steuereinheit 32 übermittelt und in dieser verarbeitet werden.

Erste Messwertaufnehmer 36 dienen zur Erfassung von Schwankungen des Erntegutflusses im Inneren des Schrägförderers 11, wobei sie eine Auslenkung zumindest einer der Ketten 13 des Schrägförderers 11 gegenüber dem Boden 14 messen und diesen Wert zur Bestimmung der Erntegutmenge an Hand einer Schichtdicke des Erntegutstromes der Steuereinheit 32 zuführen. Zweite Messwertaufnehmer 38 sind oberhalb der Rückwand 12 angeordnet und dienen zur Erfassung von eventuellen Spritzkornverlusten, die sie detektieren und daraus abgeleitete Signale an die Steuereinheit 32 übermitteln. Die Steuereinheit 32 weist zumindest einen Signalausgang auf, über welchen sie mittels einer Steuerleitung 39 eine hydraulische Aktuatorik, beispielsweise in Form eines Wegeventils, der Hydraulikzylinder 10 beherrscht.

Alternativ zu der beschriebenen Anordnung und Funktion der ersten Messwertaufnehmer 36 können zur Erfassung des Erntegutflusses auch folgende Anordnungen und Funktionen von Messwertaufnehmern vorgesehen sein:
Der erste Messwertaufnehmer dient zur Ermittlung des Erntegutflusses in Abhängigkeit von einer Bestandshöhe und Bestandsdichte des zu erntenden Halmgutes und besteht zu diesem Zweck aus zumindest einem am Schneidwerk 2 angeordneten Halmgutsensor 40 und einem Lagensensor 41, der die jeweilige Höhenlage des Schneidwerkes 2 misst, wobei die Messwerte des Halmgutsensors 40 mit denen des Lagensensors 41 in der Steuereineit 32 abgeglichen werden.

Der erste Messwertaufnehmer dient zur Ermittlung des Erntegutflusses in Abhängigkeit von einem zum Antrieb der Einzugsschnecke 6 erforderlichen Drehmoment mit Hilfe eines Drehmomentsensors 42. Auf Grund der größeren Menge des von den Schneckenwendeln und von Mitnehmern der Einzugsschnecke 6 zu fördernden Halmguts erhöht sich das aufgenommene Drehmoment, so dass sich daraus auf Schwankungen des Erntegutstromes schließen lässt.

Der erste Messwertaufnehmer dient zur Ermittlung des Erntegutflusses in Abhängigkeit von einem am Antrieb des Dreschwerkes 15 erforderlichen Drehmoments. Zu diesem Zweck ist bei einem Tangentialdreschwerk am Antrieb der Dreschtrommel 17 und/oder der Vorbeschleunigungstrommel 16 ein Drehmomentsensor 43 angeordnet. Eine entsprechende Ermittlung des Gutflusses über einen Drehmomentsensor 43 ist natürlich auch an einem Dreschwerk mit Axialtrommel möglich. Insgesamt lässt sich diese Methode für eine Erfassung von Schwankungen des Erntegutstromes mit verhältnismäßig geringem Aufwand realisieren. Beispielsweise kann bei einem Antrieb des Dreschwerkes 15 über einen Riemenvariator die an den kegelförmigen Variatorscheiben auftretende Federwegänderung zur Bestimmung des erforderlichen Drehmoments herangezogen werden. Darüber hinaus kann zur Bestimmung des im Dreschwerk 15 erforderlichen Drehmoments auch der im entsprechenden Riementrieb auftretende Schlupf ermittelt werden.

Schließlich ist in Figur 1 noch eine Alternative dargestellt, bei der der Erntegutfluss über die Motorauslastung des Antriebsmotors 19 ermittelt wird. Zu diesem Zweck ist ein Sensor 43a vorgesehen, der insbesondere über eine Schnittstelle zum Motormanagement entsprechende Daten erfasst. Diese Methode setzt allerdings voraus, dass auch die Leistungsaufnahme durch den Fahrantrieb, also von dessen Getriebe 28 überwacht wird, damit in bestimmten Fahrsituationen, wie z.B. dem Befahren von Steigungen, bei erhöhtem Fahrwiderstand durch einsinkende Antriebsräder usw., keine fehlerhafte Verstellung der Haspel 8 ausgelöst wird.

In den Figuren 2 und 3 ist das Schneidwerk 2 gemeinsam mit der Haspel 8 und dem Schrägförderer 11 dargestellt. Die Haspel 8 besteht aus mehreren in axialer Richtung zueinander beabstandeten sechseckigen Tragsternen 46, die auf einer Haspelwelle 47 befestigt sind und an ihren Eckpunkten in Längsrichtung der Haspel 8 verlaufende Tragbalken 48 aufnehmen. Dabei sind die mit Förderzinken 49 versehenen Tragbalken 48 schwenkbar in den Tragsternen 46 geführt, wobei während eines Umlaufs der Haspel 8 über ein nicht näher dargestelltes Kurvengetriebe die Stellung der Förderzinken 49 derart gesteuert wird, dass diese um einen spitzen Winkel zu einer Lotrechten versetzt in das Halmgut eingreifen. Die auf den Tragarmen 9 drehbar gelagerte Haspelwelle 47 nimmt außerdem eine Abtriebsriemenscheibe 50 auf, die über einen Treibriemen mit einer Antriebsriemenscheibe 51 verbunden ist.

Die Tragarme 9 sind, wie bereits im Zusammenhang mit der Figur 1 erläutert, über Gelenke 7 schwenkbar an der Rückwand 12 der Schneidwerksmulde 5 geführt und über die Hydraulikzylinder 10 am Schneidwerk 2 abgestützt. An zumindest einem dieser Gelenke 7 ist der Sensor 44 zur Ermittlung eines Istwertes der Höhenlage der Haspel 8 angeordnet. Die gesamte aus dem Schneidwerk 2 und dem Schrägförderer 11 bestehende Einheit ist außerdem über ein nicht näher dargestelltes am austrittsseitigen Ende des Schrägförderers 11 vorgesehenes Schwenklager am Mähdrescher abgestützt und zur Schnitthöhenverstellung des Schneidwerks 2 über einen Hubzylinder 52 verschwenkbar.

Gemäß der Figur 2 werden zwei unterschiedliche Bestandshöhen eines Erntegutes mit einem oberen Bereich, in welchem bei Getreide die Ähren und bei Raps oder Soja die Schoten tragenden Fruchtstände befinden, gezeigt. Eine große Bestandshöhe ist dabei mit 53, eine geringe Bestandshöhe mit 54 bezeichnet. In der dargestellten Erntesituation ist die Haspel 8 in Bezug auf die Bestandshöhe 53 des Erntegutes so eingestellt, dass sowohl die Tragbalken 48 als auch die Förderzinken 49 tief in das zu erntende Halmgut eingreifen, so dass eine starke Haspelunterstützung vorliegt. Das hat zur Folge, dass ganze Getreideähren oder Getreidekörner bzw. Raps- oder Sojafrucht aus aufplatzenden Schoten als Spritzkorn, das durch Pfeile 55 gekennzeichnet ist, aus dem Erntegut entfernt werden. Das Auftreten von Spritzkorn wird durch den zweiten Messwertaufnehmer 38 detektiert und an die Steuereinheit 32 signalisiert, woraufhin mittels der Hydraulikzylinder 10 die Haspel 8 in eine höhere Position, in der kein Spritzkorn auftritt, angehoben wird.

Gemäß Figur 3 wird die Höheneinstellung der Haspel 8 in Abhängigkeit vom Erntegutfluss geregelt, wodurch mittels einer entsprechenden Haspelunterstützungen Schwankungen des Gutflusses ausgeglichen und somit eine gleichmäßige Auslastung der nachfolgenden Dresch- und Trenneinrichtung bei maximaler ohne Körnerverluste realisierbarer Erntegeschwindigkeit zu erzielen. Dabei soll das jeweilige Antriebsdrehmoment an der Vorbeschleunigungstrommel 16 oder der Dreschtrommel 17 mittels des ersten Messwertaufnehmers 36 erfasst und der Steuereinheit 32 zugeleitet werden. Diese sorgt dafür, dass in Abhängigkeit von dem Parameter "Erntegutfluss" die Höheneinstellung der Haspel 8 über die Hydraulikzylinder 10 variiert wird. Zusätzlich können im Falle eines gegenüber der Schneidwerksmulde 5 separaten Schneidtisches 4 auch der Abstand des Mähbalkens 3 gegenüber der Einzugsschnecke 6 verändert werden. Das entsprechende den Erntegutfluss charakterisierende Signal kann über die Steuereinheit 32 auch eine Längsverschiebung der Haspel 8 oder deren Drehzahländerung bewirken, sofern derartige Verstellmöglichkeiten vorgesehen sind. In der Figur 3 ist mit 56 ein Regelbereich für die Höhenverstellung der Haspel 8 bezeichnet.

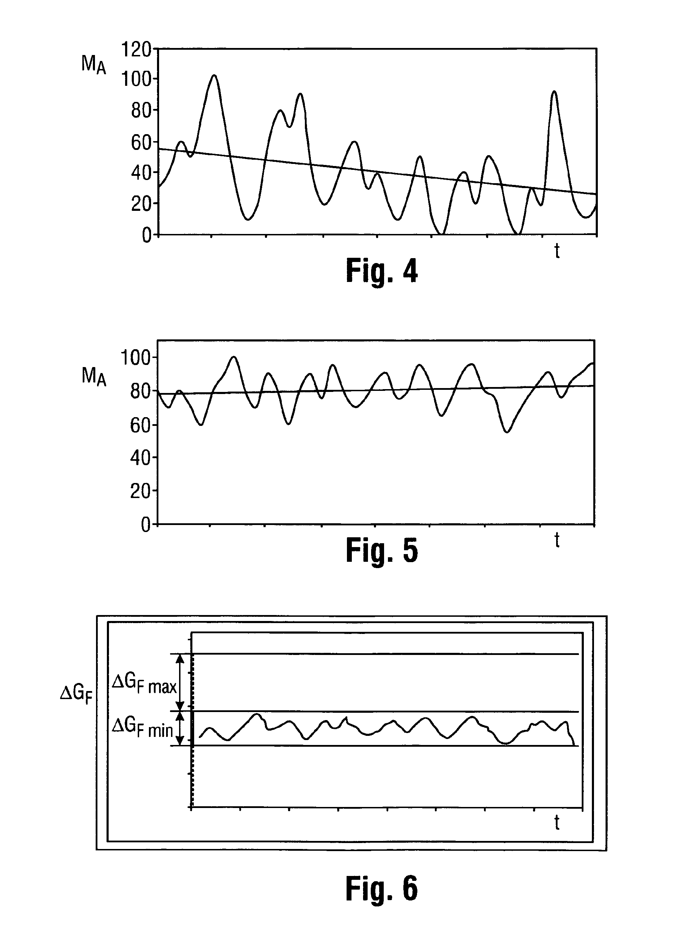

Die Figuren 4 und 5 zeigen als Diagramme die Motorauslastung des Antriebsmotors 19, die im Wesentlichen durch die Schwankungen des Gutflusses bestimmt wird, wobei jeweils auf der Ordinate die Motorauslastung M_{A} und auf der Abszisse die Zeit t aufgetragen ist. Nach Figur 4 wird mit geringer Haspelunterstützung gearbeitet, wodurch die mittlere Motorauslastung M_{A} auf einen niedrigen Wert sinkt. Die nachteilige Folge davon ist eine geringe Erntegeschwindigkeit. Demgegenüber ist nach der Figur 5 auf Grund einer höheren Haspelunterstützung auch eine hohe mittlere Motorauslastung M_{A} die Folge. Damit steigt auch die Erntegeschwindigkeit an. Die Figur 6 zeigt ein Diagramm, in welchem die Gutflussschwankungen ΔG_{F} über der Zeit t aufgetragen sind. Als optimaler Bereich, der durch eine entsprechende Einstellung der Haspelunterstützung erreichbar ist, sind Gutflussschwankungen mit minimalem Schwankungsbereich ΔG_{Fmin} also mit geringer Amplitude anzusehen.

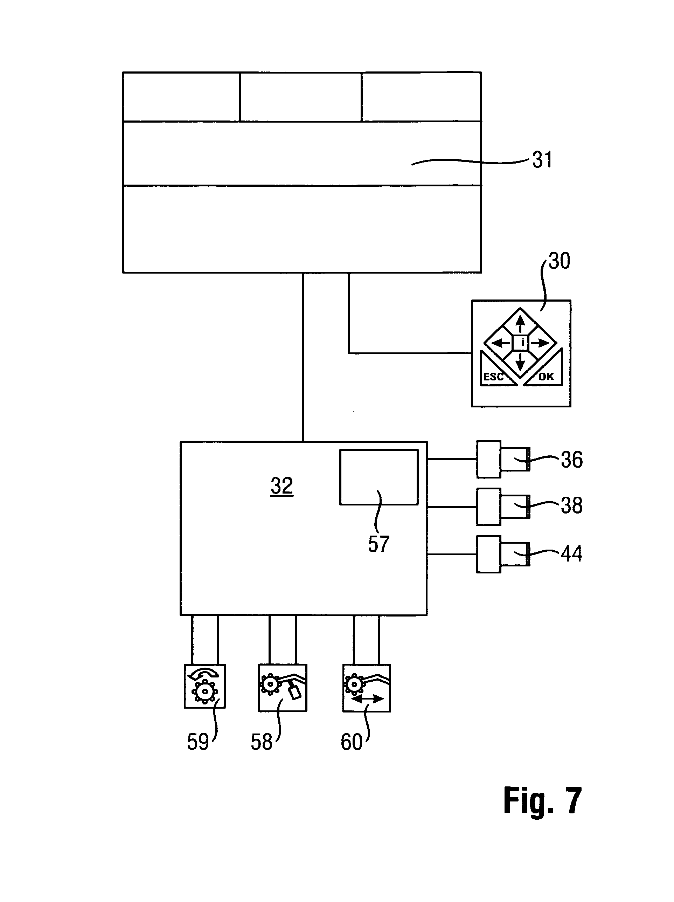

Schließlich zeigt Figur 7 eine mögliche Ausbildung des eine CPU enthaltenden Displays 31, das unterschiedliche Felder für eingegebene oder zur Auswahl stehende Daten, betreffend die Art des Erntegutes, dessen Zustand usw., den Modus, mit dem die Haspelsteuerung betrieben wird, und Daten, die von den erfindungsgemäßen Messwertaufnehmern 36 und 38 sowie weiteren Sensoren ermittelt werden, aufweist. Es kann sich dabei folglich um Menüfelder, Bedienungsanzeigefelder, Ergebnisfelder usw. handeln. Selbstverständlich lassen sich entsprechende Anzeigen auch in die bei modernen Mähdreschern existierenden Displays integrieren. Weiterhin stehen mit dem Display 31 nach Figur 7 die Eingabeeinheit 30 und die Steuereinheit 32 in Verbindung. Mit der dargestellten Eingabeeinheit können nach dem Aufrufen unterschiedlicher Menüs Steuerungsprozesse aktiviert werden. Die Steuereinheit 32 weist ferner eine Speichereinrichtung 57, aus dem gespeicherte Einstellparameter abgerufen werden können, auf.

An die Steuereinheit sind, wie zuvor bereits beschrieben, der erste Messwertaufnehmer 36 zur Erfassung des Erntegutflusses, der zweite Messwertaufnehmer 38 zum Detektieren von Spritzkornverlusten und der Sensor 44 für Ist-Werte der Höhenlage der Haspel 8 angeschlossen. Die Steuereinheit 32 steht außerdem in Verbindung mit einer hydraulischen Steuereinrichtung 58 für die die Höhenverstellung der Haspel 8 bewirkenden Hydraulikzylinder 10, mit einer hydraulischen Steuereinrichtung 59 einer Drehzahlverstellung eines Variatortriebes für den Haspelantrieb und mit einer hydraulischen Steuereinrichtung 60 für eine Längsverstellung der Haspel 8. Es ist darüber hinaus denkbar, weitere Funktionen im Bereich des Schneidwerkes 2 zu steuern, die einen Einfluss auf den Erntegutfluss und eventuelle Körnerverluste haben.

### Bezugszeichenliste

- 1: selbstfahrender Mähdrescher
- 2: Schneidwerk
- 3: Mähbalken
- 4: Schneidtisch
- 5: Schneidwerksmulde
- 6: Einzugsschnecke
- 7: Gelenk
- 8: Haspel
- 9: Tragarm
- 10: Hydraulikzylinder
- 11: Schrägförderer
- 12: Rückwand von 5
- 13: Kette
- 14: Boden von 11
- 14a: Förderleisten
- 15: Dreschwerk
- 16: Vorbeschleunigungstrommel
- 17: Dreschtrommel
- 18: Dreschkorb
- 19: Antriebsmotor
- 20: Variatorgetriebe
- 21: Hordenschüttler
- 22: Siebe
- 23: Reinigungsgebläse
- 24: Vorbereitungsboden
- 25: Rücklaufboden
- 26: Überkehrelevator
- 27: Korntankelevator
- 28: Getriebe
- 29: Fahrerkabine
- 30: Eingabeeinheit
- 31: Display
- 32: Steuereinheit
- 33: Datenleitung
- 34: Datenleitung
- 35: erste Signalleitung
- 36: erster Messwertaufnehmer für Schwankungen des Erntegutflusses
- 37: zweite Signalleitung
- 38: zweiter Messwertaufnehmer für Spritzkornverluste
- 39: Steuerleitung
- 40: Halmgutsensor
- 41: Lagesensor für 2
- 42: Drehmomentsensor
- 43: Drehmomentsensor
- 43a: Sensor
- 44: Sensor für Ist-Wert der Höhenlage von 8
- 45: Sensorleitung
- 46: Tragstern von 8
- 47: Haspelwelle von 8
- 48: Tragbalken von 8
- 49: Förderzinken von 8
- 50: Abtriebsriemenscheibe auf 47
- 51: Antriebsriemenscheibe
- 52: Hubzylinder von 2
- 53: Bestandshöhe groß
- 54: Bestandshöhe gering
- 55: Pfeile Spritzkorn
- 56: Regelbereich der Höhenverstellung von 8
- 57: Speichereinrichtung
- 58: hydraulische Steuereinrichtung für 10
- 59: hydraulische Steuereinrichtung für Drehzahl von 8
- 60: hydraulische Steuereinrichtung für Längsverstellung von 8
- M_{A}: Motorauslastung
- T: Zeit
- ΔG_{F}: Gutflussschwankungen
- ΔG_{Fmin}: minimale Gutflussschwankungen

## Patentansprüche

1. Mähdrescher (1) mit einem eine Haspel (8) und eine Schneidwerksmulde (5) aufweisenden Schneidwerk (2), wobei die rotativ angetriebene Haspel (8) mehrere mit Abstand zueinander auf einer Haspelwelle (47) angeordnete Tragsterne (46) sowie an diesen geführte mit Förderzinken (49) versehene Tragbalken (48) aufweist und wobei die Haspel (8) über Tragarme (9) an der Schneidwerksmulde (5) geführt und gegenüber dieser und einem dieser vorgeördneten Schneidtisch (4) zumindest höhenverstellbar ist, mit einem Sensor (44) zur Ermittlung eines Istwertes der Höhenlage der Haspel (8), mit einem mit der Schneidwerksmulde (5) verbundenen Schrägförderer (11), dem in Richtung eines Erntegutflusses eine Dresch- und Trenneinrichtung (15) nachgeordnet ist, und mit einer Steuereinheit (32), die mit dem Sensor (44) und zumindest einem Messwertaufnehmer zur Erfassung von Erntebedingungen des Mähdreschers (1) und mit zur Höhenverstellung der Haspel dienenden Stellelementen (10) verbunden ist, **dadurch gekennzeichnet, dass** der zumindest eine Messwertaufnehmer (36, 40, 42, 43, 43a, 38) zur Erfassung von Schwankungen des Erntegutflusses in zumindest einem dem Schneidtisch (4) nachgeordneten Förderorgan ausgebildet ist.

2. Mähdrescher nach Patentanspruch 1, **dadurch gekennzeichnet, dass** der Messwertaufnehmer (36) zur Erfassung von Schwankungen des Erntegutflusses als im Schrägförderer (11) angeordnete Erntegutmengenmesseinrichtung ausgebildet ist, wobei die Erntemengenmesseinrichtung eine Auslenkung zumindest einer Förderkette (13) oder als Schichthöhenpotentiometer eine Schichtdicke des Erntegutstromes ermittelt oder zur Erfassung von Schwankungen des Erntegutflusses an einem Antrieb einer im Schneidwerk angeordneten Einzugsschnecke (6) angeordnet ist und zur Ermittlung des auf die Einzugsschnecke (6) übertragenen Antriebsdrehmoments dient.

3. Mähdrescher nach Patentanspruch 1, **dadurch gekennzeichnet, dass** der Messwertaufnehmer (43a) zur Erfassung von Schwankungen des Erntegutflusses als Bestandteil eines an einem Antriebsmotor (19) vorgesehenen Motormanagements ausgebildet ist, wobei der Antriebsmotor (19) das Schneidwerk (2), den Schrägförderer (11) sowie die Dresch- und Trenneinrichtung (15) antreibt und vom Motormanagement eine jeweilige Motorauslastung ermittelbar ist.

4. Mähdrescher nach Patentanspruch 1, **dadurch gekennzeichnet, dass** der Messwertaufnehmer (43) zur Erfassung von Schwankungen des Erntegutflusses im Antrieb eines Dreschwerks (15) angeordnet ist und zur Ermittlung einer lastabhängigen Schlupfänderung oder einer Änderung von dessen Antriebsdrehmoment dient.

5. Mähdrescher nach einem der Patentansprüche 1 bis 4, **dadurch gekennzeichnet, dass** ein zweiter Messwertaufnehmer (38) zur Erfassung von Spritzkornverlusten oberhalb einer vertikal verlaufenden Rückwand (12) der Schneidwerksmulde (5) und/oder an den Tragbalken (48) der Haspel (8) angeordnet ist.

6. Mähdrescher nach Patentanspruch 5, **dadurch gekennzeichnet, dass** der Messwertaufnehmer (38) zur Erfassung von Spritzkornverlusten als Spektrometer mit einer Lichtquelle und einem optischen Detektor zum Empfang von Lichtimpulsen des von den Spritzkörnern reflektierten Lichts oder als Kamerasensor ausgebildet ist.

7. Mähdrescher nach Patentanspruch 5, **dadurch gekennzeichnet, dass** der Messwertaufnehmer (38) zur Erfassung von Spritzkornverlusten einen Detektor aufweist, an dem durch auf diesen aufprallende Spritzkörner impulsförmige Signale erzeugt werden.

8. Verfahren zum Betrieb eines eine rotativ angetriebene Haspel (8) aufweisenden Mähdreschers (1), wobei eine Höheneinstellung der Haspel (8) gegenüber einer Schneidwerksmulde (5) bzw. einem Schneidtisch (4) über eine Steuereinheit (32) und Stellelemente (10) selbsttätig variiert wird, wobei ein Istwert der Höheneinstellung der Haspel (8) über einen Sensor (44) bestimmt und als und wobei über zumindest einen Messwertaufnehmer erfasste Erntebedingungen Parameter für eine Höhenverstellung der Haspel (8) sind, **dadurch gekennzeichnet, dass** eine selbsttätige Höheneinstellung der Haspel (8) im Rahmen eines definierten oder manuell definierbaren Steuerungsprozesses mittels der Stelleelemente (10) und der Steuereinheit (32) in Abhängigkeit von einem ersten Parameter erfolgt, der aus über erste Messwertaufnehmer (36, 40, 42, 43, 43a, 38) ermittelten Schwankungen des Erntegutflusses an einer innerhalb der Schneidwerksmulde (5) angeordneten Einzugsschnecke (6), an einem Schrägförderer (11)oder an einem Dreschwerk (15) resultiert.

9. Verfahren nach Patentanspruch 8, **dadurch gekennzeichnet, dass** eine selbsttätige Höheneinstellung der Haspel (8) mittels der Stelleelemente (10) und der Steuereinheit (32) in Abhängigkeit von einem zweiten Parameter erfolgt, der als von einem zweiten Messwertaufnehmer (38) detektierte Spritzkornverluste erfasst wird.

10. Verfahren nach Patentanspruch 9, **dadurch gekennzeichnet, dass** der zweite Parameter zur Korrektur der auf Grund des ersten Parameters vorgenommenen Höheneinstellung der Haspel (8) dient.

11. Verfahren nach einem der Patentansprüche 8 bis 10, **dadurch gekennzeichnet, dass** eine selbsttätige Höheneinstellung der Haspel (8) über eine Eingabeeinheit (30), die Steuereinheit (32) und die Stellelemente (10) gemäß folgenden Schritten erfolgt:
- Manuelle Höheneinstellung
- Eingabe der Fruchtart und/oder Zustand des Erntegutes: Reifegrad, Feuchtigkeit, Lagergetreide
- Wechsel in eine Betriebsart "Automatischer Betrieb"
- Analyse eines auf Grund des Erntegutflusses gebildeten Signals
- Ermittlung einer Schwankungsbreite dieses Signals
- Bei geringer Schwankungsbreite: Anheben der Haspel in höhere Position
- Bei großer Schwankungsbreite: Absenken der Haspel in niedrigere Position
- Parallele Auswertung eines einen Spritzkornverlust charakterisierenden Signals, das zu einer eventuellen Korrektur der ersten ernteflussabhängigen Höheneinstellung führt.
- Bei auftretenden Spritzkornverlusten: Automatisches Anheben der Haspel bis Spritzkornverluste reduziert sind
- Wechsel zur Überprüfung der erntegutflussabhängigen Höheneinstellung.

## Claims

1. A combine harvester (1) comprising a cutting mechanism (2) having a reel (8) and a cutting mechanism trough (5), wherein the rotatably driven reel (8) has a plurality of support star members (46) arranged at a spacing from each other on a reel shaft (47) and support bars (48) guided thereon and provided with conveyor tines (49) and wherein the reel (8) is guided by way of support arms (9) at the cutting mechanism trough (5) and is at least adjustable in height we respect to the cutting mechanism trough and a cutting table arranged in front thereof, comprising a sensor (44) for ascertaining an actual value of the heightwise position of the reel (8), an inclined conveyor (11) which is connected to the cutting mechanism trough (5) and downstream of which in the direction of a flow of crop material is a threshing and separating device (15), and a control unit (32) connected to the sensor (44) and at least one measurement value pick-up for detecting crop conditions of the combine harvester (1) and two adjusting elements (10) serving for heightwise adjustment of the reel, **characterised in that** the at least one measurement value pick-up (36, 40, 42, 43, 43a, 38) is adapted to detect fluctuations in the flow of crop material in at least one conveyor member arranged downstream of the cutting table (4).

2. A combine harvester according to claim 1 **characterised in that** the measurement value pick-up (36) for detecting fluctuations in the flow of crop material is in the form of a crop material quantity measuring device arranged in the inclined conveyor (11), wherein the crop material quantity measuring device ascertains a deflection of at least one conveyor chain (13) or as a layer height potentiometer ascertains a thickness of a layer of the flow of crop material or is arranged for detecting fluctuations in the flow of crop material at a drive of an intake auger (6) arranged in the cutting mechanism and serves to ascertain the drive torque transmitted to the intake auger (6).

3. A combine harvester according to claim 1 **characterised in that** the measurement value pick-up (43a) for detecting fluctuations in the flow of crop material is in the form of a component of an engine management system on a drive engine (19), wherein the drive engine (19) drives the cutting mechanism (2), the inclined conveyor (11) and the threshing and separating device (15) and a respective engine loading can be ascertained by the engine management system.

4. A combine harvester according to claim 1 **characterised in that** the measurement value pick-up (43) for detecting fluctuations in the flow of crop material is arranged in the drive of a threshing mechanism (15) and serves to ascertain a load-dependent change in slip or a change in the drive torque thereof.

5. A combine harvester according to one of claims 1 to 4 **characterised in that** a second measurement value pick-up (38) for detecting oversize grain losses is arranged above a vertically extending rear wall (12) of the cutting mechanism trough (5) and/or on the support bars (48) of the reel (8).

6. A combine harvester according to claim 5 **characterised in that** the measurement value pick-up (38) for detecting oversize grain losses is in the form of a spectrometer having a light source and an optical detector for receiving light pulses of the light reflected by the oversize grains or in the form of a camera sensor.

7. A combine harvester according to claim 5 **characterised in that** the measurement value pick-up (38) for detecting oversize grain losses has a detector at which pulse signals are produced by oversize grains impinging thereon.

8. A method of operating a combine harvester (1) having a rotatably driven reel (8), wherein a heightwise setting of the reel (8) is automatically varied with respect to a cutting mechanism trough (5) or a cutting table (4) by way of a control unit (32) and setting elements (10), wherein an actual value of the heightwise setting of the reel (8) is determined by way of a sensor (44) and wherein crop conditions detected by way of at least one measurement value pick-up are parameters for the heightwise adjustment of the reel (8), **characterised in that** automatic heightwise adjustment of the reel (8) is effected in accordance with a defined or manually definable control process by means of the setting elements (10) and the control unit (32) in dependence on a first parameter which results from fluctuations in the flow of crop material, ascertained by way of first measurement value pick-ups (36, 40, 42, 43, 43a, 38), at an intake auger (6) arranged within the cutting mechanism trough (5), at an inclined conveyor (11) or at a threshing mechanism (15).

9. A method according to claim 8 **characterised in that** automatic heightwise adjustment of the reel (8) is effected by means of the setting elements (10) and the control unit (32) in dependence on a second parameter which is detected as oversize grain losses detected by a second measurement value pick-up (38).

10. A method according to claim 9 **characterised in that** the second parameter serves for correction of the heightwise adjustment of the reel (8), that is implemented on the basis of the first parameter.

11. A method according to one of claims 8 to 10 **characterised in that** automatic heightwise adjustment of the reel (8) is effected by way an input unit (30), the control unit (32) and the setting elements (10) in accordance with the following steps:
- manual heightwise adjustment
- input of the kind of crop and/or condition of the crop material: degree of ripeness, moisture content, laid grain
- change to an operating mode "automatic operation"
- analysis of a signal formed on the basis of the flow of crop material
- ascertaining a range of fluctuation in said signal
- in the case of a small range of fluctuation: lifting the reel into a higher position
- in the case of a large range of fluctuation: lowering the reel into a lower position
- parallel evaluation of a signal which characterises an oversize grain loss and which leads to a possible correction of the first crop flow-dependent heightwise adjustment
- when oversize grain losses occur: automatically lifting the reel until oversize grain losses are reduced
- change for checking the crop material flow-dependent heightwise adjustment.

## Revendications

1. Moissonneuse-batteuse (1) comprenant un tablier de coupe (2) comportant un rabatteur (8) et un bac de tablier de coupe (5), le rabatteur (8) entraîné en rotation comportant plusieurs étoiles porteuses (46) disposées à distance les unes des autres sur un arbre de rabatteur (47) ainsi que des barres porteuses (48) guidées sur celles-ci et munies de dents d'alimentation (49), et le rabatteur (8) étant guidé par l'intermédiaire de bras porteurs (9) au niveau du bac de tablier de coupe (5) et étant au moins réglable en hauteur par rapport à celui-ci et à une table de coupe (4) disposée en amont, comprenant un capteur (44) pour déterminer une valeur réelle de la position en hauteur du rabatteur (8), comprenant un convoyeur (11) qui est relié au bac de tablier de coupe (5) et auquel succède, dans la direction d'un flux de produit récolté, un dispositif de battage et de séparation (15), et comprenant une unité de commande (32) connectée au capteur (44) et au moins à un transducteur pour détecter des conditions de récolte de la moissonneuse-batteuse (1), et comprenant des éléments de positionnement (10) servant au réglage en hauteur du rabatteur, **caractérisée en ce que** le au moins un transducteur (36, 40, 42, 43, 43a, 38) destiné à détecter des variations du flux de produit récolté est au moins conformé en un organe d'amenée disposé en aval de la table de coupe (4).

2. Moissonneuse-batteuse selon la revendication 1, **caractérisée en ce que** le transducteur (36) destiné à détecter des variations du flux de produit récolté est conformé en dispositif de mesure de quantité de produit récolté disposé dans le convoyeur (11), le dispositif de mesure de quantité de récolte déterminant une déviation d'au moins une chaîne d'alimentation (13) ou, sous forme de potentiomètre de hauteur de couche, une épaisseur de couche du flux de produit de récolte ou, pour détecter des variations du flux de produit récolté, étant disposé au niveau d'un moyen d'entraînement d'une vis d'amenée (6) disposée dans le tablier de coupe et servant à déterminer le couple d'entraînement transmis à la vis d'amenée (6).

3. Moissonneuse-batteuse selon la revendication 1, **caractérisée en ce que** le transducteur (43a) destiné à détecter des variations du flux de produit récolté est conformé en composant d'un système de gestion de moteur prévu sur un moteur d'entraînement (19), le moteur d'entraînement (19) entraînant le tablier de coupe (2), le convoyeur (11) ainsi que le dispositif de battage et de séparation (15), et une charge moteur étant détectable par le système de gestion du moteur.

4. Moissonneuse-batteuse selon la revendication 1, **caractérisée en ce que** le transducteur (43) destiné à détecter des variations du flux de produit récolté est disposé dans le moyen d'entraînement du système de battage (15) et sert à déterminer une variation de glissement en fonction de la charge ou une variation de son couple d'entraînement.

5. Moissonneuse-batteuse selon une des revendications 1 à 4, **caractérisée en ce qu'**un second transducteur (38) destiné à détecter des pertes de grain par projection est disposé au-dessus d'une paroi arrière verticale (12) du bac de tablier de coupe (5) et/ou sur les barres porteuses (48) du rabatteur (8).

6. Moissonneuse-batteuse selon la revendication 5, **caractérisée en ce que** le transducteur (38) destiné à détecter des pertes de grain par projection est conformé en spectromètre, avec une source lumineuse et un détecteur optique pour recevoir des impulsions lumineuses de la lumière réfléchie par les grains projetés, ou en capteur de caméra.

7. Moissonneuse-batteuse selon la revendication 5, **caractérisé en ce que** le transducteur (38) destiné à détecter des pertes de grain par projection comporte un détecteur dans lequel des signaux en forme d'impulsions sont produits par des grains projetés qui le percutent.

8. Procédé pour exploiter une moissonneuse-batteuse (1) comportant un rabatteur entraîné en rotation (8), un réglage en hauteur du rabatteur (8) par rapport à un bac de tablier de coupe (5), respectivement à une table de coupe (4) étant modifié automatiquement par l'intermédiaire d'une unité de commande (32) et d'éléments de positionnement (10), une valeur réelle de réglage en hauteur du rabatteur (8) étant déterminée par l'intermédiaire d'un capteur (44), et des conditions de récolte détectées par l'intermédiaire d'au moins un transducteur étant des paramètres pour un réglage en hauteur du rabatteur (8), **caractérisé en ce qu'**un réglage en hauteur automatique du rabatteur (8) s'effectue dans le cadre d'un processus de commande défini ou définissable manuellement au moyen des éléments de positionnement (10) et de l'unité de commande (32) en fonction d'un premier paramètre qui résulte de variations du flux de produit récolté déterminées par l'intermédiaire de premiers transducteurs (36, 40, 42, 43, 43a, 38) au niveau d'une vis d'amenée (6) disposée à l'intérieur du bac de tablier de coupe (5), d'un convoyeur (11) ou d'un système de battage (15).

9. Procédé selon la revendication 8, **caractérisé en ce qu'**un réglage en hauteur automatique du rabatteur (8) s'effectue au moyen des éléments de positionnement (10) et de l'unité de commande (32) en fonction d'un second paramètre qui est déterminé en tant que pertes de grain par projection détectées par un second transducteur (38) .

10. Procédé selon la revendication 9, **caractérisé en ce que** le second paramètre sert à corriger le réglage en hauteur du rabatteur (8) effectué sur la base du premier paramètre.

11. Procédé selon une des revendications 8 à 10, **caractérisé en ce qu'**un réglage en hauteur automatique du rabatteur (8) par l'intermédiaire d'une unité d'entrée (30), de l'unité de commande (32) et des éléments de positionnement (10) s'effectue selon les étapes suivantes :
- réglage en hauteur manuel
- entrée du type de récolte et/ou état du produit récolté : degré de maturité, humidité, récolte versée
- changement de mode de fonctionnement « fonctionnement automatique »
- analyse du signal formé sur la base du flux de produit récolté
- détermination de la largeur de variation de ce signal
- en cas de faible largeur de variation : levage du rabatteur en position haute
- en cas de grande largeur de variation : abaissement du rabatteur en position basse
- analyse parallèle d'un signal caractérisant une perte de grain par projection et entraînant une correction éventuelle du premier réglage en hauteur effectué en fonction du flux de récolte
- en présence de pertes de grain par projection : levage automatique du rabatteur jusqu'à ce que les pertes de grain par projection soient réduites
- changement pour vérification du réglage en hauteur effectué en fonction du flux de récolte.
